# EUROPÄISCHE PATENTSCHRIFT

(11) **EP 3 577 011 B1**
(45) Veröffentlichungstag und Bekanntmachung des Hinweises auf die Patenterteilung: **06.01.2021**
(21) Anmeldenummer: 18704910.1
(22) Anmeldetag: 31.01.2018
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 02.02.2017 DE 102017201708
(43) Veröffentlichungstag der Anmeldung: 11.12.2019
(73) Patentinhaber: thyssenkrupp Presta AG, 9492 Eschen (LI); thyssenkrupp AG, 45143 Essen (DE)
(72) Erfinder: SCHNITZER, Hieronymus, 9487 Gamprin (LI); WIEBE, Richard, 9492 Eschen (LI); PALTINISANU, Ciprian, 9492 Eschen (LI)
(74) Vertreter: thyssenkrupp Intellectual Property GmbH
(86) Internationale Anmeldenummer: PCT/EP2018/052448
(87) Internationale Veröffentlichungsnummer: WO 2018/141819

(56) Entgegenhaltungen:
- DE-B3-102009 059 159

## Beschreibung

Die Erfindung betrifft eine Lenksäule für ein Kraftfahrzeug, mit einer Lenkwelle, die in einem Mantelteil drehbar um ihre Längsachse gelagert ist, mit einem Führungsteil, durch das das Mantelteil gehalten ist, mit einer wirkungsmäßig zwischen dem Führungsteil und dem Mantelteil angeordneten Energieabsorptionsvorrichtung, die mindestens einen Biegedraht aufweist, der mit einem ersten Endabschnitt mit dem Mantelteil und mit einem zweiten Endabschnitt mit dem Führungsteil gekoppelt ist, wobei eine Schiene mit zumindest einer Seitenwand am Mantelteil angebracht ist, wobei ein Zapfen mit dem Führungsteil gekoppelt ist und der zweite Endabschnitt des Biegedrahtes einen Koppelabschnitt aufweist, der den Zapfen hintergreift und sich zumindest in einem Abstützpunkt an der Seitenwand zumindest im Crashfall abstützt.

Eine derartige Lenksäule ist aus der DE 10 2009 059 159 B3 bekannt. Bei der bekannten Lenksäule ist ein Biegedraht durch zwei Nasen an die Zahnplatte und somit an das Führungsteil gekoppelt. Die zwei Nasen sind erforderlich, um ein Aufbiegen des Anbindungsabschnitts des Biegedrahts zu verhindern, denn mit einer Nase allein wäre der Anbindungsabschnitt nicht ausreichend fixiert. Nachteil dieser Lösung ist es, dass die Konstruktion bauraumintensiv und aufwendig ist.

Aufgabe der Erfindung ist es eine Lenksäule der eingangs genannten Art zu verbessern, so dass der Bauraumbedarf der Energieabsorptionsvorrichtung verringert und ihre sichere Funktion gewährleistet ist.

Gelöst wird diese Aufgabe durch die im Anspruch 1 genannten Merkmale. Vorteilhafte Ausgestaltungen sind in den Unteransprüchen beschrieben.

Die erfindungsgemäße Lösung sieht vor, dass der Abstützpunkt auf der Seite des Zapfens angeordnet ist, der von dem Koppelabschnitt umgriffen ist, wobei der Zapfen einen ersten Abstand zu der Seitenwand aufweist, wobei ein zweiter Abstand zwischen dem Zapfen und dem Abstützpunkt gemessen in axialer Richtung mindestens das 1,1 fache des ersten Abstands beträgt.

Der zweite Abstand wird zwischen dem zumindest einen Abstützpunkt und dem äußersten axialen Punkt des Zapfens auf der Seite, auf dem der Koppelabschnitt den Zapfen hintergreift, gemessen. Unter dem äußersten axialen Punkt des Zapfens ist die äußerste Erstreckung des Zapfens in Richtung der Längsachse zu verstehen.

Der zumindest eine Abstützpunkt, an dem sich der Koppelabschnitt des Biegedrahts an der Seitenwand abstützt, ist bevorzugt ein Punkt einer Abstützfläche zwischen dem Koppelabschnitt des Biegedrahts und der Seitenwand. In einer vorteilhaften Weiterbildung kann es vorgesehen sein, dass zwischen der Seitenwand und dem Koppelabschnitt des Biegedrahts ein Zwischenelement, beispielsweise ein Einlageblech vorgesehen ist. Somit erfolgt die Abstützung des Koppelabschnitts über den zumindest einen Abstützpunkt durch das Zwischenelement auf die Seitenwand.

Der erfindungsgemäße verbreiterte Koppelabschnitt verhindert ein Abrutschen des zweiten Endabschnitts des Biegedrahts von dem Zapfen. Insbesondere bei einer ziehenden Ankopplung des Koppelabschnitts an den Zapfen wird ein Aufbiegen des zweiten Endabschnitts des Biegedrahts wirkungsvoll verhindert. Aber auch bei einer schiebenden Abstützung verhindert der verbreiterte Koppelabschnitt, dass der zweite Endabschnitt des Biegedrahts zwischen dem Zapfen und der Seitenwand hindurchrutscht. Dadurch, dass der zumindest eine Abstützpunkt auf der Seite des Zapfens angeordnet ist, der von dem Koppelabschnitt umgriffen ist und der Abstützpunkt mindestens das 1,1-fache des ersten Abstands beträgt, ist eine Abstützung des Koppelabschnitts an der Seitenwand gewährleistet, der ein Aufbiegen des Koppelabschnitts bei einer Krafteinleitung verhindert und weiterhin ein Hindurchbewegen des Koppelabschnitts zwischen Zapfen und Seitenwand verhindert ist. In keinem Fall sind zwei Zapfen zur sicheren Kopplung des zweiten Endabschnitts des Biegedrahts erforderlich. Gegenüber dem bekannten Stand der Technik kann daher ein Zapfen eingespart werden, was zu einer Verringerung der Baulänge in axialer Richtung führt. Insbesondere bei Ausführungsformen mit zwei oder mehreren axial hintereinander angeordneten Biegedrähten ergibt sich eine zwei- oder mehrfache Einsparung von axialem Bauraum.

Bevorzugt beträgt der zweite Abstand mindestens das 1,3 fache des ersten Abstands. Somit weist der Abstützpunkt einen entsprechenden Abstand zum Zapfen auf, so dass die Abstützwirkung noch verbessert werden kann.

Bevorzugt beträgt der zweite Abstand höchstens das 4-fache des ersten Abstands. Somit weist der zumindest eine Abstützpunkt einen entsprechenden Abstand zum Zapfen auf, so dass die Abstützwirkung erzielt werden kann und gleichzeitig eine platzsparende Ausführung gewährleistet ist.

In einer vorteilhaften Weiterbildung kann es vorgesehen sein, dass der Zapfen mit einer Zahnplatte verbunden ist, wobei die Zahnplatte gegenüber dem Führungsteil axial verschiebbar ist und mittels einer Arretiervorrichtung axial gegenüber dem Führungsteil arretierbar ist, so dass unter Einwirkung von im Crashfall auftretenden Axialkräften eine axiale Verschiebung des Mantelteils gegenüber der am Führungsteil arretiertem Zahnplatte den Biegedraht verformt und dabei ein Teil der Bewegungsenergie durch den Biegedraht absorbiert wird.

Mit Vorteil weist die Energieabsorptionsvorrichtung der erfindungsgemäßen Lenksäule mindestens zwei Biegedrähte auf, die axial hintereinander angeordnet sind, wobei die Zahnplatte mindestens zwei radial vorspringende Zapfen aufweist, wobei ein erster Zapfen im axialen Abstand zu einem zweiten Zapfen angeordnet ist und die jeweils an Koppelabschnitten verbreiterten zweiten Endabschnitte der mindestens zwei Biegedrähte die jeweiligen Zapfen hintergreifen und sich an der Seitenwand der Schiene in einem jeweiligen Abstützpunkt abstützen und wobei mindestens ein Biegedraht mittels eines Schalters deaktivierbar ist. Die Energieabsorptionsvorrichtung kann mit zwei Biegedrähten mehr Bewegungsenergie absorbieren als mit einem einzigen Biegedraht. Durch die Maßnahme, dass mindestens ein Biegedraht mittels eines Schalters deaktivierbar ist, lässt sich die absorbierbare Energie an die jeweilige Crashsituation anpassen, beispielsweise an den Umstand, ob der Fahrer angegurtet ist oder nicht angegurtet ist. Wenn wie im letztgenannten Fall voraussichtlich viel Energie absorbiert werden muss, werden beide Biegedrähte verformt. Soll aber weniger Energie absorbiert werden, kann ein Biegedraht mittels des Schalters deaktiviert werden, so dass nur ein einziger Biegedraht verformt wird.

In einer vorteilhaften Ausgestaltungsform der Erfindung ist mindestens ein zweiter Zapfen der Zahnplatte als Nutenstein ausgestaltet und in einer Längsnut der Zahnplatte axial verschiebbar aufgenommen, wobei die axiale Verschiebung des Nutensteins in der Längsnut durch einen mittels des Schalters zurückziehbaren Bolzen blockierbar ist. Bleibt der Schalter unbetätigt, so ist der Bolzen nicht zurückgezogen und blockiert die Verschiebung des Nutenstands in der Längsnut der Zahnplatte. Daher kann der zweite Zapfen genauso wenig wie der erste Zapfen gegenüber der Zahnplatte verschoben werden. Dies aber hat zur Folge, dass im Crashfall bei einer relativen Verschiebung zwischen dem in Fahrtrichtung verschobenen Mantelteil und der am Trägerteil fixierten Zahnplatte beide Biegedrähte verformt werden und viel Energie absorbiert wird. Wird aber im Crashfall der Schalter betätigt, so wird der Bolzen zurückgezogen und eine axiale Verschiebung des Nutensteins in der Längsnut der Zahnplatte ermöglicht. Wird nun das Mantelteil in Fahrtrichtung verschoben, so nimmt der zweite Biegedraht den zweiten Zapfen mit, so dass sich der zweite Zapfen in der Längsnut der Zahnplatte verschiebt und der zweite Biegedraht unverformt bleibt. Lediglich der erste Zapfen ist gegenüber der Zahnplatte unbeweglich und führt daher zu einer Verformung des ersten Biegedrahtes. In diesem Fall wird durch einen Biegedraht allein weniger Energie absorbiert als im vorgenannten Fall durch zwei Biegedrähte.

Mit Vorteil ist der Schalter als pyrotechnischer Schalter ausgestaltet. Ein pyrotechnischer Schalter kann im Crashfall durch eine zentrale Steuereinheit des Kraftfahrzeugs elektrisch gezündet werden und deaktiviert daher in Sekundenbruchteilen rechtzeitig vor dem Aufprall des Fahrers auf das Lenkrad einen der Biegedrähte, wenn die zentrale Steuereinheit festgestellt hat, dass weniger Energie absorbiert werden muss.

Mit Vorteil weist der Koppelabschnitt des Biegedrahts einen hornförmigen Stützabschnitt aufweist, dessen freies Ende an der Seitenwand der Schiene in dem Abstützpunkt abgestützt ist.

Mit Vorteil weist bei ziehenden Ankopplung des Betriebsdrahtes an den Zapfen der Zahnplatte der Koppelabschnitt des zweiten Endabschnitts des Biegedrahts einen hornförmigen Stützabschnitt auf, dessen freies Ende an der Seitenwand der Schiene abgestützt ist. Diese Maßnahme gewährleistet, dass der Koppelabschnitt stets fest am Zapfen der Zahnplatte anliegt und nicht abrutschen kann.

Die Ankopplung des Biegedrahts kann noch verbessert werden, indem der zweite Endabschnitt des Biegedrahts zwischen dem jeweiligen Zapfen der Zahnplatte und der Seitenwand der Schiene eingeklemmt ist.

Im Falle einer schiebenden Ankopplung des Biegedrahtes an den Zapfen der Zahnplatte weist der am Mantelteil befestigte erste Endabschnitt des jeweiligen Biegedrahts mit Vorteil ein abgewinkeltes freies Ende auf, welches einen ersten Vorsprung des Mantelteils hintergreift, wobei der erste Endabschnitt zwischen dem ersten Vorsprung und mindestens einem zweiten Vorsprung des Mantelteils eingeklemmt ist. Hierdurch wird der am Mantelteil befestigte und im Crashhall hier auf Zug beanspruchte erste Endabschnitt des jeweiligen Biegedrahts sicher am Mantelteil fixiert.

Mit Vorteil erstreckt sich der erste Vorsprung des Mantelteils axial über einen Teil des ersten Endabschnitts, an dem der Vorsprung anliegt, wobei gegenüber dem ersten Vorsprung sind ein zweiter Vorsprung und ein dritter Vorsprung des Mantelteils im axialen Abstand zueinander angeordnet sind. Hierdurch wird der erste Endabschnitt des jeweiligen Biegedrahts noch besser am Mantelteil fixiert.

Ausführungsbeispiele der Erfindung werden nachfolgend anhand der Zeichnungen im Detail beschrieben, Die Figuren zeigen im Einzelnen:
- Figur 1:: eine perspektivische Gesamtansicht eines oberen Teils einer erfindungsgemäßen Lenksäule;
- Figur 2:: eine perspektivische Detailansicht derselben Lenksäule;
- Figur 3:: eine weitere perspektivische Teilansicht derselben Lenksäule;
- Figur 4:: eine perspektivische Ansicht einer Zahnplatte;
- Figur 5:: eine geschnittene Teilansicht einer Energieabsorptionsvorrichtung in einer ersten Ausführungsform;
- Figur 6:: ein vergrößertes Detail aus Fig. 5;
- Figur 6a:: ein vergrößertes Detail ähnlich der Figur 6 in einer zweiten alternativen Ausführungsform,
- Figur 6b:: Detailansicht eines Koppelabschnitt eines Biegedraht aus dem Stand der Technik,
- Figur 7:: eine geschnittene Teilansicht der Energieabsorptionsvorrichtung von Fig. 5, jedoch nach Verschiebung des Mantelteils im Crashfall unter Verformung beider Biegedrähte;
- Figur 8:: eine geschnittene Ansicht derselben Energieabsorptionsvorrichtung wie in Fig. 7, jedoch mit nur einem verformten Biegedraht;
- Figur 9:: eine geschnittene Ansicht einer Energieabsorptionsvorrichtung in einer zweiten Ausführungsform.

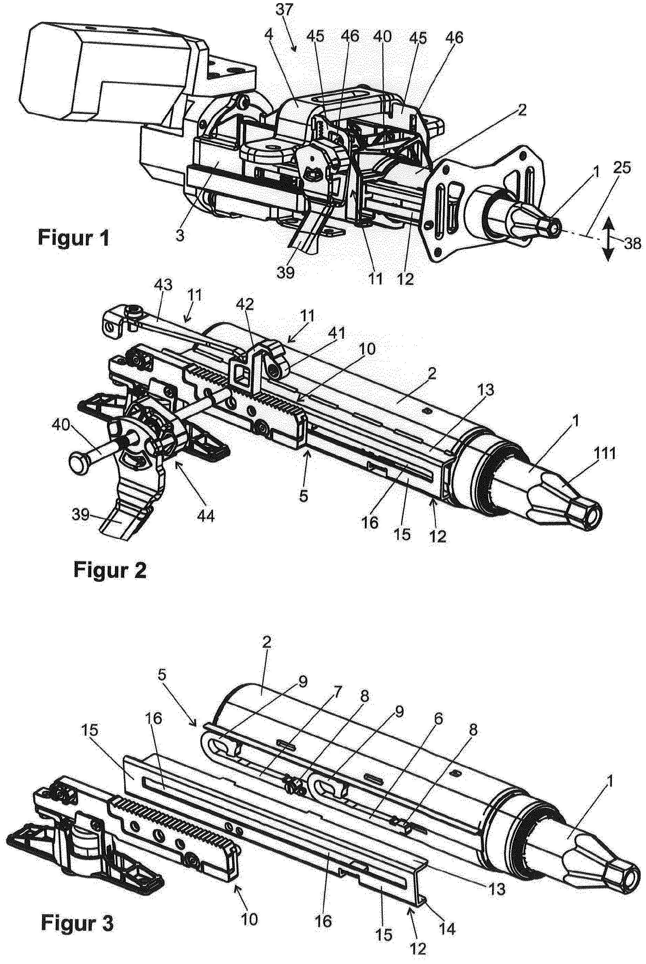

Figur 1 zeigt eine Gesamtansicht eines oberen Teils einer verstellbaren Lenksäule 37 für ein Kraftfahrzeug, wobei eine Lenkwelle 1 um eine Längsachse 25 drehbar innerhalb eines Mantelteils 2 gelagert ist. Das Mantelteil 2 ist seinerseits an einem Führungsteil 3 axial verschiebbar gelagert, wodurch eine Längsverstellung der Lenksäule und des nicht gezeigten Lenkrads ermöglicht wird. Das Führungsteil 3 ist seinerseits wiederum in einem am Fahrzeugchassis festgeschraubten Träger 4 in vertikaler Richtung 38 schwenkbar gelagert, um eine Höhenverstellung der Lenksäule 37 und des nicht gezeigten Lenkrads zu ermöglichen.

Um während der Fahrt des Kraftfahrzeugs eine unbeabsichtigte Längsverstellung oder Höhenverstellung der Lenkwelle 1 und des nicht gezeigten Lenkrads zu verhindern, ist eine Arretiervorrichtung 11 vorgesehen, die durch einen Hebel 39 arretierbar oder lösbar ist. Wird der Hebel 39 geschwenkt, so dreht er einen Nocken 41, der wiederum einen Riegel 42 gegen die Kraft einer Blattfeder 43 nach oben hebt. An der Unterseite besitzt der Riegel 42 eine Verzahnung, mit der er in eine Verzahnung der Zahnplatte 10 eingreifen kann. Durch Anheben des Riegels 42 wird er von der Zahnplatte 10 abgehoben, so dass sich die Zahnplatte 10 zusammen mit dem Mantelteil 2 in axialer Richtung frei verschieben lässt. Schwenkt man den Hebel 39 in Gegenrichtung, so gibt der Nocken 41 den Riegel 42 frei, welcher anschließend durch die Blattfeder 43 nach unten gegen die Zahnplatte 10 gedrückt wird. Dabei kommt die Verzahnung des Riegels 42 mit der Verzahnung der Zahnplatte 10 in Eingriff, so dass eine Verschiebung in axialer Richtung zwischen Zahnplatte 10 und Riegel 42 nicht mehr möglich ist. Der Riegel 42 ist seinerseits an dem Führungsteil 3 gelagert, welches zwar in Vertikalrichtung 38 schwenkbar, aber in Axialrichtung unverschiebbar am Träger 4 gelagert ist.

Der Hebel 39 ist außerdem mit einer Zuspannvorrichtung 44 verbunden, die eine Nockenscheibe aufweist, welche durch den Hebel 39 gedreht werden kann. Die Nockenscheibe wirkt über Kippstifte mit einem Klemmteil zusammen, welches durch Drehen der Nockenscheibe in Richtung der Bolzenachse gedrückt wird. Der Bolzen 40 durchdringt zwei Klemmbacken 45, die beiderseits des Führungsteils 3 angeordnet sind. Als Durchgang für den Bolzen 40 sind in den Klemmbacken 45 zwei Vertikalschlitze 46 vorgesehen. Dadurch kann der Bolzen 40 in den Vertikalschlitzen 46 in Vertikalrichtung 38 verschoben werden, wobei das mit dem Bolzen 40 verbundene Führungsteil 3 ebenfalls in Vertikalrichtung 38 verschwenkbar ist. Wird der Hebel 39 in Arretierstellung gebracht, so bewirkt die Zuspannvorrichtung 44, dass der Bolzen 40 und damit das Führungsteil 3 mit den Klemmbacken 45 des Trägers 4 verklemmt und somit gegen Verschiebungen in Vertikalrichtung 38 gesichert und arretiert ist.

Die erfindungsgemäße Lenksäule 37 ist mit einer Energieabsorptionsvorrichtung 5 ausgestattet, deren Aufbau man am besten in den Figuren 3 bis 5 erkennt. Die dargestellte Energieabsorptionsvorrichtung 5 umfasst zwei Biegedrähte 6, 7, von denen einer auskoppelbar aus dem Kraftfluss ausgestaltet ist. Die Erfindung umfasst jedoch darüber hinaus Energieabsorptionsvorrichtungen mit einem oder mehr als zwei Biegedrähten, die zu- und abschaltbar ausgestaltet sein können. Unter dem in dieser Beschreibung genannten Begriff "Biegedraht" werden alle Verformungsbauteile umfasst, die durch Verformen Bewegungsenergie absorbieren können, insbesondere auch Biegestreifen.

Die Biegedrähte 6, 7, 26, 27 der in den Figuren 3 bis 6a und 7 bis 9 gezeigten Ausführungsbeispiele haben alle einen ersten Endabschnitt 8, 28, der mit dem Mantelteil 2 fest verbunden ist, und einen zweiten Endabschnitt 9, 29 der mit der am Führungsteil 3 arretierten Zahnplatte 10 in Verbindung steht. Hierfür ist die Zahnplatte 10 mit zwei Zapfen 17, 18, 31, 32 versehen, an die die jeweils zweiten Endabschnitte 9, 29 der Biegedrähte 6, 7, 26, 27 angekoppelt sind.

Am Mantelteil 2 ist zur Aufnahme der Energieabsorptionsvorrichtung 5 eine C-förmige Schiene 12 vorgesehen, die zwei Seitenwände 13, 14 und einen Mittelabschnitt 15 aufweist, welcher mit einem axial ausgerichteten Längsschlitz 16 versehen ist. Die Biegedrähte 6, 7 bzw. 26, 27 sind im Inneren der C-förmigen Schiene 12 aufgenommen, wobei die Seitenwände 13, 14 der Schiene 12 mit dem Mantelteil 2 verschweißt sind und der Mittelabschnitt 15 der Schiene 12 die Biegedrähte 6, 7 bzw. 26, 27 abdeckt. Die Zapfen 17, 18 bzw. 31, 32 der Zahnplatte 10 stehen von der Zahnplatte 10 im Einbauzustand relativ zur Drehachse 25 der Lenkwelle 1 radial nach innen ab und ragen durch den Längsschlitz 16 der Schiene 12 in den Innenraum der Energieabsorptionsvorrichtung 5, wo sie mit dem zweiten Endabschnitt 9, 29 der Biegedrähte 6, 7 bzw. 26, 27 in Eingriff sind.

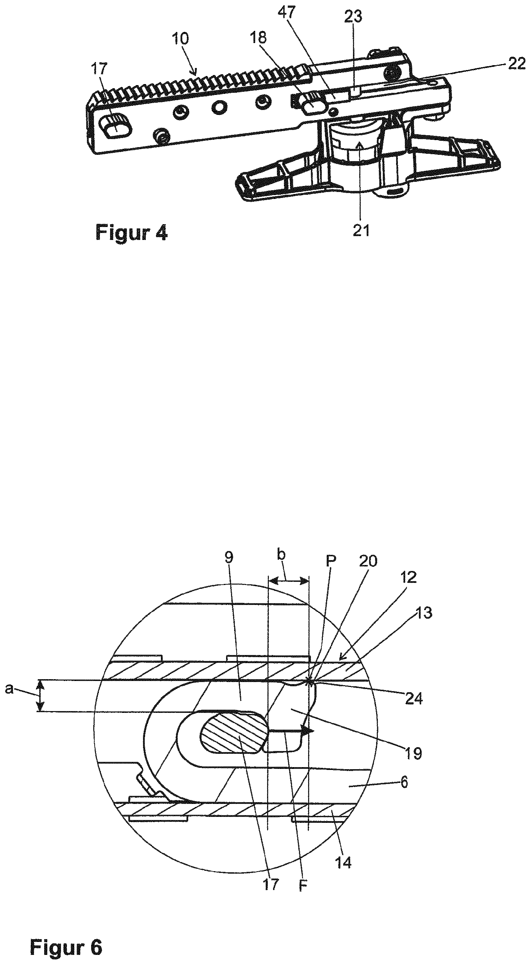

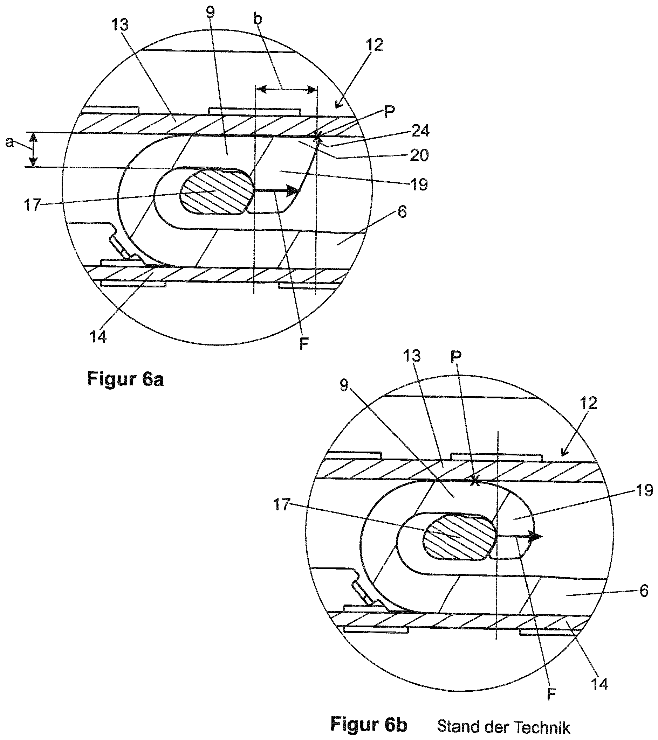

Figur 6 und 6a zeigen einen vergrößerten Ausschnitt, aus dem das Zusammenwirken zwischen dem zweiten Endabschnitt 9 des ersten Biegedrahtes 6 und dem ersten Zapfen 17 der Zahnplatte 10 ersichtlich ist, wobei der Koppelabschnitt der Figur 6a eine alternative Ausgestaltung aufweist. Die beiden Biegedrähte 6, 7 haben an ihrem jeweiligen zweiten Endabschnitt 9 einen Koppelabschnitt 19 ausgebildet, der einerseits den Zapfen 17, 18 hintergreift und sich andererseits an der Seitenwand 13 der Schiene 12 in dem Abstützpunkt P abstützt. Hierfür ist am Koppelabschnitt 19 ein Stützabschnitt 20 ausgeformt, der an der Seitenwand 13 anliegt. Der Zapfen 17 weist einen ersten Abstand a zur Seitenwand 13 auf. Der Abstützpunkt P weist einen zweiten Abstand b zu dem äußersten axialen Punkt des Zapfens 17 auf der Seite, auf dem der Koppelabschnitt 19 den Zapfen 17 hintergreift. Der zweite Abstand b ist größer als der erste Abstand a. Unter dem äußersten axialen Punkt des Zapfens 17 ist die äußerste Erstreckung des Zapfens 17 in Richtung der Längsachse 25 gemeint. In dieser Ausführung entspricht die äußerste Erstreckung des Zapfens 17 dem Krafteinleitungspunkt der im Crashfall wirkenden Kraft F zwischen dem Zapfen 17 und dem Koppelabschnitt 19 des Biegedrahts 6.

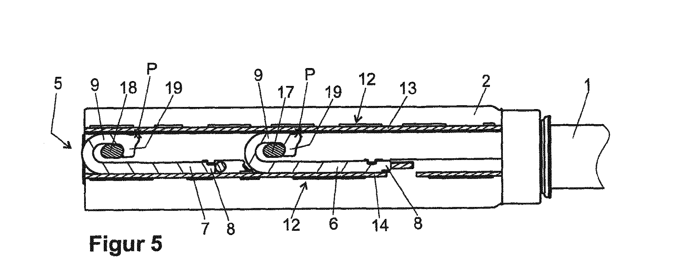

Wenn im Crashfall durch den auf das nicht gezeigte Lenkrad aufprallenden Fahrer eine Axialkraft auf die Lenkwelle 1 und das Mantelteil 2 ausgeübt wird, so wird diese Axialkraft über die am Mantelteil 2 bzw. der Seitenwand 14 der Schiene 12 befestigten jeweiligen ersten Endabschnitte 8 der beiden Biegedrähte 6, 7 auf die Biegedrähte 6, 7 übertragen, so dass an den jeweiligen zweiten Endabschnitten 9 gegenüber den mit der am Träger 4 arretierten Zahnplatte 10 fest verbundenen Zapfen 17, 18 eine Zugkraft F ausgeübt wird, denn die Zapfen 17, 18 sind fest arretiert und die zweiten Endabschnitte 9 der beiden Biegedrähte 6, 7 werden in Fahrtrichtung nach vorne, in den Figuren 5 bis 8 nach links gezogen.

Durch die erfindungsgemäße Ausgestaltung der Koppelabschnitte 19 mit zumindest einem Abstützpunkt P, der einen zweiten Abstand b zum Zapfen 17 aufweist, können diese auch bei sehr starken Axialkräften nicht aufgebogen werden, so dass die zweiten Endabschnitte 9, der Biegedrähte 6, 7 etwa zwischen den Zapfen 17, 18 und der Seitenwand 13 der Schiene 12 hindurchgleiten würden. Vielmehr hat die Erfindung den Vorteil, dass ein solches Hindurchgleiten oder Abrutschen der zweiten Endabschnitte 9 mit Sicherheit verhindert wird. Der erfindungsgemäße Koppelabschnitt 19 ist auf Grund des Abstands b, der größer ist als der Abstand a zwischen dem Zapfen 17 und der Seitenwand 13, so breit ausgestaltet, dass weder ein Hindurchrutschen zwischen den Zapfen 17, 18 und der Seitenwand 13 der Schiene 12 noch ein Aufbiegen des zweiten Endabschnitts 9 möglich ist, denn der an der Seitenwand 13 der Schiene 12 mit dem Abstützpunkt P anliegende Stützabschnitt 20 wirkt dem Aufbiegemoment entgegen, in dem sich der Koppelabschnitt 19 ideal an der Seitenwand 13 abstützt. Der Abstand a zwischen dem Zapfen 17 und der Seitenwand 13 ist in einer Richtung orthogonal zur Längsachse 25 gemessen. Der Abstützpunkt P ist auf der Seite des Zapfens 17 angeordnet, auf der der Koppelabschnitt 19 den Zapfen 17 hintergreift.

Der Abstand b zwischen dem Zapfen 17 und dem Abstützpunkt P ist gemessen in Richtung der Längsachse 25, so dass der Abstützpunkt P in einem Abstand b von dem Zapfen beabstandet ist.

In der Figur 6a ist der Abstützpunkt P ein Punkt der Abstützfläche zwischen dem Koppelabschnitt 19 des Biegedrahts 6 und der Seitenwand 13, wobei der Abstützpunkt P jener Abstützpunkt ist, der am weitesten von dem Zapfen 17 entfernt ist. Dieser Abstützpunkt P entspricht somit dem am weitesten vom Zapfen 17 entfernten Abstützpunkt zwischen Koppelabschnitt 19 und Seitenwand 13 gemessen in axialer Richtung.

Figur 6b zeigt einen vergrößerten Ausschnitt, aus dem das Zusammenwirken zwischen dem zweiten Endabschnitt 9 des ersten Biegedrahtes 6 und dem ersten Zapfen 17 der Zahnplatte 10, wie es aus dem Stand der Technik bekannt ist. Der Abstützpunkt P zwischen dem zweiten Endabschnitt 9 und der Seitenwand 13 ist nicht auf der Seite, auf dem der Koppelabschnitt 19 den Zapfen 17 hintergreift, ausgebildet, so dass es zu einem ungewollten Aufbiegen des Koppelabschnitts 19 kommen kann, da keine das Aufbiegen des Koppelabschnitts 19 verhindernde Abstützung an der Seitenwand 13 gewährleistet ist.

Mit Vorteil kann bei der erfindungsgemäßen Energieabsorptionsvorrichtung für jeden Biegedraht 6, 7, 26, 27 auf einen zusätzlichen Sicherungszapfen, der ein Aufbiegen des zweiten Endabschnitts 9, 29 verhindern würde, verzichtet werden. Dadurch wird der Einbauraum der Energieabsorptionsvorrichtung 5 in Axialrichtung durch den Wegfall der axialen Ausdehnung eines nicht mehr notwendigen zusätzlichen Sicherungszapfens verringert. Bei den gezeigten Ausführungsbeispielen mit zwei in axialer Richtung hintereinander angeordneten Biegedrähten 6, 7 bzw. 26, 27 ist sogar die Baulänge des wegfallenden Sicherungszapfens doppelt eingespart worden.

Bei den gezeigten Ausführungsbeispielen ist jeweils der zweite Zapfen 18, 32 mit einer Schaltvorrichtung 21, 23 verbunden, durch die der zweite Biegedraht 7, 27 deaktivierbar ist, so dass dieser zweite Biegedraht 7, 27 im Crashfall nicht verformt wird. Fig. 4 zeigt die Zahnplatte 10 mit dem unverschiebbar befestigten ersten Zapfen 17 und dem in einer Längsnut 22 axial verschiebbar angeordneten zweiten Zapfen 18. Die Verschiebung des zweiten Zapfens 18 in der Längsnut 22 wird durch einen Bolzen 23 verhindert, welcher durch eine nicht gezeigte seitliche Öffnung quer in die Längsnut 22 hineinragt. Der Bolzen 23 ist mit einem Schalter 21 verbunden, der im gezeigten Ausführungsbeispiel als pyrotechnischer Schalter 21 ausgestaltet ist. In dem gezeigten Schaltzustand ist also auch der zweite Zapfen 18 in Axialrichtung unverschiebbar fest mit der Zahnplatte 10 verbunden.

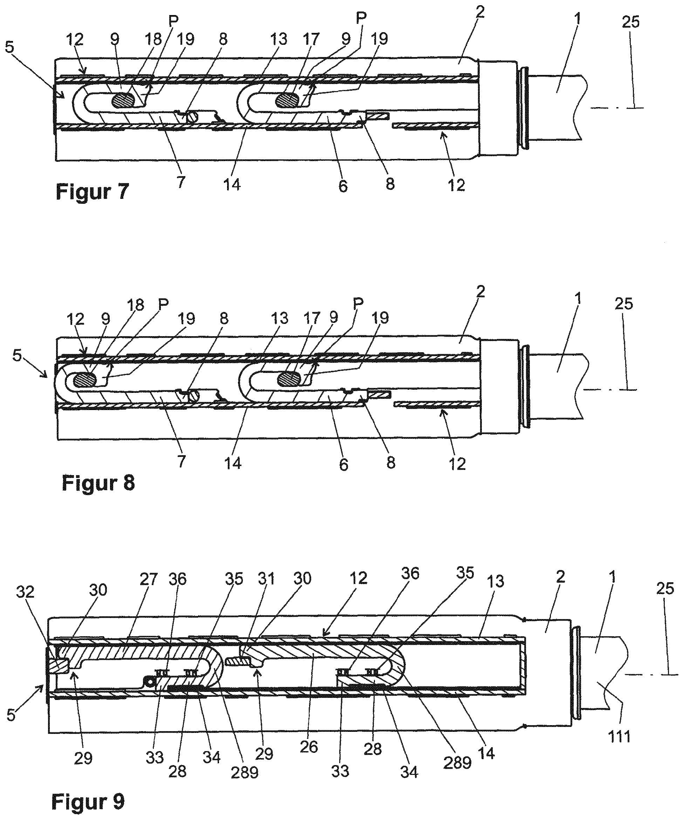

Soll im Crashfall möglichst viel Bewegungsenergie absorbiert werden, müssen beide Biegedrähte 6, 7 bzw. 26, 27 verformt werden, weil zwei Biegedrähte mehr Energie absorbieren können als ein Biegedraht, sofern der erste Biegedraht 6, 26 dem zweiten Biegedraht 7, 27 bzgl. der Kraft-Weg-Kennung entspricht. Diese Situation ist in Figur 7 dargestellt. Hier wurde das Mantelteil 2 in Richtung der Drehachse 25 nach links verschoben, während die Zahnplatte 10 und beide Zapfen 17, 18 axial unverschiebbar festgehalten wurde. Wie man in Fig. 7 erkennen kann, haben sich dabei beide Biegedrähte 6, 7 verbogen bzw. deformiert.

Der andere Fall, bei dem nur der erste Biegedraht 6 deformiert wurde, während der zweite Biegedraht 7 unverformt blieb, ist in Fig. 8 dargestellt. Wenn beispielsweise eine zentrale Steuerungselektronik des Kraftfahrzeugs aufgrund von Eingaben durch entsprechende Sensoren entschieden hat, dass in der Lenksäule im Crashfall weniger Energie absorbiert werden soll, so betätigt die zentrale Steuereinheit über ein elektrisches Signal den pyrotechnischen Schalter 21, in welchem eine Treibladung gezündet wird, die innerhalb von Sekundenbruchteilen den Bolzen 23 aus der Längsnut 22 der Zahnplatte 10 heraus zieht. Dadurch wird der zweite Zapfen 18 innerhalb der Längsnut 22 axial verschiebbar. Wenn nun im Crashfall aufgrund starker Axialkräfte das Mantelteil 2 in Richtung der Drehachse 25, in der Darstellung von Fig. 8 nach links verschoben wird, bleibt nur der erste Zapfen 17 ortsfest stehen, wobei der erste Biegedraht 6 verformt wird. Der zweite Zapfen 18 hingegen ist innerhalb der Längsnut 22 der Zahnplatte 10 leicht verschiebbar. Er wird daher von dem zweiten Biegedraht 7 bei der axialen Verschiebung des Mantelteils 2 nach links mitgenommen, so dass sich seine Lage relativ zum Mantelteil 2 nicht ändert. Dabei wird der zweite Biegedraht 7 nicht verformt. Insgesamt setzt das Mantelteil 2 mit der Lenkwelle 1 und dem nicht gezeigten Lenkrad einem Aufprall auf das Lenkrad im zuletzt beschriebenen Schaltzustand des pyrotechnischen Schalters 21 weniger Widerstand entgegen als im davor vorbeschriebenen Fall mit zwei verformten Biegedrähten 6, 7 bzw. 26, 27.

Um ein sicheres Gleiten des zweiten Zapfens 18 in der Längsnut 22 zu gewährleisten und ein Kippen oder Verklemmen zu verhindern, ist der zweite Zapfen 18 als Nutenstein mit einem in der Längsnut 22 angeordneten verlängerten Führungsabschnitt 47 ausgestaltet. Dabei liegt der Bolzen 23 direkt am Führungsabschnitt 47 des Nutensteins 18, 47 an.

Ein weiteres Ausführungsbeispiel ist in der Figur 9 dargestellt. Figur 9 offenbart eine Lenksäule für ein Kraftfahrzeug, mit einer Lenkwelle 1, die in einem Mantelteil 2 drehbar um ihre Längsachse 25 gelagert ist, mit einem nicht dargestellten Führungsteil 3, durch das die Mantelteil 2 gehalten ist, mit einer wirkungsmäßig zwischen dem Führungsteil 3 und dem Mantelteil 2 angeordneten Energieabsorptionsvorrichtung 5, die mindestens einen Biegedraht 26, 27 aufweist, der mit einem ersten Endabschnitt 28 mit dem Mantelteil 2 und mit einem zweiten Endabschnitt 29 mit Führungsteil 3 gekoppelt ist, wobei eine Schiene 12 mit zumindest einer Seitenwand 13 am Mantelteil 2 angebracht ist, wobei ein Zapfen 31, 32 mit dem Führungsteil 3 gekoppelt ist und der zweite Endabschnitt 29 des Biegedrahtes 26, 27 einen Koppelabschnitt 30 aufweist, wobei der Biegedraht 26, 27 einen Umbiegungsabschnitt 289 zwischen dem ersten Endabschnitt 28 und dem zweiten Endeabschnitt 29 aufweist, wobei der Umbiegungsabschnitt 289 auf der dem lenkradseitigen Ende 111 der Lenkwelle 1 zugewandten Seite angeordnet ist. Bevorzugt ist der Umbiegungsabschnitt 289 zumindest eines der Biegedrähte 26, 27 auf der dem lenkradseitigen Ende 111 der Lenkwelle 1 zugewandten Seite angeordnet. In einer besonders bevorzugten Ausführung sind die Umbiegungsabschnitte 289 des jeweiligen Biegedrähts 26, 27 auf der dem lenkradseitigen Ende 111 der Lenkwelle 1 zugewandten Seite angeordnet, d.h. alle Biegedrähte 26, 27 sind in der gleichen Richtung orientiert, wobei der Umbiegungsabschnitt auf der Seite des lenkradseitigen Endes 111 angeordnet ist.

Die jeweils zweiten Endabschnitte 29 der Biegedrähte 26, 27 sind an die jeweiligen Zapfen 31, 32 schiebend angekoppelt. Auch bei diesem Ausführungsbeispiel geht der zweite Endabschnitt 29 jeweils in einen verbreiteten Koppelabschnitt 30 über, der einerseits mit einem in Fig. 9 nach unten ragenden Bereich den jeweiligen Zapfen 31, 32 hintergreift und sich mit einem zwischen dem jeweiligen Zapfen 31, 32 und der Seitenwand 13 der C-förmigen Schiene 12 angeordneten Bereich an der Seitenwand 13 abstützt. Nachdem im zweiten Ausführungsbeispiel der zweite Endabschnitt 29 an den jeweiligen Zapfen 31, 32 schiebend angekoppelt sind, müssen die jeweiligen ersten Endabschnitte 28 der Biegedrähte 26, 27 am Mantelteil 2 bzw. der anderen Seitenwand 14 der Schiene 12 ziehend angekoppelt sein. Hierfür ist am Mantelteil 2 ein erster Vorsprung 34 ausgebildet, welcher den ersten Endabschnitt 28 seitlich abstützt und von einem abgewinkelten freien Ende 33 des ersten Endabschnitts 28 hintergriffen wird. Um ein Abrutschen des freien Endes 33 vom ersten Vorsprung 34 zu verhindern, ist ein zweiter Vorsprung 35 und ein dritter Vorsprung 36 gegenüber dem ersten Vorsprung 34 angeordnet, so dass der erste Endabschnitt 28 zwischen dem ersten Vorsprung 34 einerseits und den beiden weiteren Vorsprüngen 35 und 36 andererseits eingeklemmt wird.

Bezüglich der zwei Schaltzustände des Schalters 21 funktioniert die in Fig. 9 gezeigte zweite Ausführungsformen genauso wie die in den anderen Figuren gezeigte erste Ausführungsform. Der zweite Zapfen 32 ist im einen Schaltzustand fest mit der Zahnplatte 10 verbunden, so dass er sich einer Verschiebung des Mantelteils 2 in axialer Richtung nach links genauso wie der erste Zapfen 31 entgegenstemmt, so dass beide Biegedrähte 26, 27 verformt werden und ein höherer Betrag von Bewegungsenergie mit den beiden Biegedrähten 26, 27 absorbiert wird.

Im anderen Schaltzustand ist der zweite Zapfen 32 bei zurückgezogenem Bolzen 23 in der Längsnut 22 der Zahnplatte 10 axial verschiebbar, so dass er zusammen mit dem axial nach links verschobenen Mantelteil 2 mitgeführt und der zweite Biegedraht 27 nicht verformt wird. Wird aber nur der erste Bindedraht 26 verformt, so ist der Betrag der absorbierten Bewegungsenergie geringer als im anderen Fall.

### BEZUGSZEICHENLISTE

- 1: Lenkwelle
- 2: Mantelteil
- 3: Führungsteil
- 4: Träger
- 5: Energieabsorptionsvorrichtung
- 6: erster Biegedraht
- 7: zweiter Biegedraht
- 8: erster Endabschnitt
- 9: zweiter Endabschnitt
- 10: Zahnplatte
- 11: Arretiervorrichtung
- 12: Schiene
- 13: Seitenwand
- 14: Seitenwand
- 15: Mittelabschnitt
- 16: Längsschlitz
- 17: erster Zapfen
- 18: zweiter Zapfen
- 19: Koppelabschnitt
- 20: Stützabschnitt
- 21: Schalter
- 22: Längsnut
- 23: Bolzen
- 24: freies Ende
- 25: Drehachse
- 26: erster Biegedraht
- 27: zweiter Biegedraht
- 28: erster Endabschnitt
- 29: zweiter Endabschnitt
- 30: Koppelabschnitt
- 31: erster Zapfen
- 32: zweiter Zapfen
- 33: freies Ende
- 34: erster Vorsprung
- 35: zweiter Vorsprung
- 36: dritter Vorsprung
- 37: verstellbare Lenksäule
- 38: Vertikalrichtung
- 39: Hebel
- 40: Bolzen
- 41: Nocken
- 42: Riegel
- 43: Blattfeder
- 44: Zuspannvorrichtung
- 45: Klemmbacken
- 46: Vertikalschlitz
- 47: Führungsabschnitt
- a: erster Abstand
- b: zweiter Abstand
- P: Abstützpunkt

## Patentansprüche

1. Lenksäule für ein Kraftfahrzeug, mit einer Lenkwelle (1), die in einem Mantelteil (2) drehbar um ihre Längsachse (25) gelagert ist, mit einem Führungsteil (3), durch das das Mantelteil (2) gehalten ist, mit einer wirkungsmäßig zwischen dem Führungsteil (3) und dem Mantelteil (2) angeordneten Energieabsorptionsvorrichtung (5), die mindestens einen Biegedraht (6, 7, 26, 27) aufweist, der mit einem ersten Endabschnitt (8, 28) mit dem Mantelteil (2) und mit einem zweiten Endabschnitt (9, 29) mit dem Führungsteil (3) gekoppelt ist, wobei eine Schiene (12) mit zumindest einer Seitenwand (13) am Mantelteil (2) angebracht ist, wobei ein Zapfen (17, 18, 31, 32) mit dem Führungsteil (3) gekoppelt ist und der zweite Endabschnitt (9, 29) des Biegedrahtes (6, 7, 26, 27) einen Koppelabschnitt (19, 30) aufweist, der den Zapfen (17, 18, 31, 32) hintergreift und sich zumindest in einem Abstützpunkt (P) an der Seitenwand (13) zumindest im Crashfall abstützt, **dadurch gekennzeichnet, dass** der Abstützpunkt (P) auf der Seite des Zapfens (17, 18, 31, 32) angeordnet ist, der von dem Koppelabschnitt (19, 30) umgriffen ist, wobei der Zapfen (17, 18, 31, 32) einen ersten Abstand (a) zu der Seitenwand (13) aufweist, wobei ein zweiter Abstand (b) zwischen dem Zapfen (17, 18, 31, 32) und dem Abstützpunkt (P) gemessen in axialer Richtung mindestens das 1,1 fache des ersten Abstands (a) beträgt.

2. Lenksäule nach Anspruch 1, **dadurch gekennzeichnet, dass** der Zapfen (17, 18, 31, 32) mit einer Zahnplatte (10) verbunden ist, wobei die Zahnplatte (10) gegenüber dem Führungsteil (3) axial verschiebbar ist und mittels einer Arretiervorrichtung (11) axial gegenüber dem Führungsteil (3) arretierbar ist, so dass unter Einwirkung von im Crashfall auftretenden Axialkräften eine axiale Verschiebung des Mantelteils (2) gegenüber der am Führungsteil (3) arretiertem Zahnplatte (10) den Biegedraht (6, 7, 26 ,27) verformt und dabei ein Teil der Bewegungsenergie durch den Biegedraht (6, 7, 26, 27) absorbiert wird.

3. Lenksäule nach Anspruch 2, **dadurch gekennzeichnet, dass** die Energieabsorptionsvorrichtung (5) mindestens zwei Biegedrähte (6, 7, 26, 27) aufweist, die axial hintereinander angeordnet sind, dass die Zahnplatte (10) mindestens zwei radial vorspringende Zapfen (17, 18, 31, 32) aufweist, wobei ein erster Zapfen (17, 31) im axialen Abstand zu einem zweiten Zapfen (18, 32) angeordnet ist und die jeweils an Koppelabschnitten (19, 30) verbreiterten zweiten Endabschnitte (9, 29) der mindestens zwei Biegedrähte (6, 7, 26, 27) die jeweiligen Zapfen (17, 18, 31, 32) hintergreifen und sich an der Seitenwand (13) der Schiene (12) in einem jeweiligen Abstützpunkt (P) abstützen, und dass mindestens ein Biegedraht (7, 27) mittels eines Schalters (21) deaktivierbar ist.

4. Lenksäule nach Anspruch 3, **dadurch gekennzeichnet, dass** mindestens ein zweiter Zapfen (18, 32) der Zahnplatte (10) als Nutenstein (18, 47) ausgestaltet und in einer Längsnut (22) der Zahnplatte (10) axial verschiebbar aufgenommen ist, wobei die Axialverschiebung des Nutensteins (18, 47) in der Längsnut (22) durch einen mittels des Schalters (21) zurückziehbaren Bolzens (23) blockierbar ist.

5. Lenksäule nach Anspruch 3 oder 4, **dadurch gekennzeichnet, dass** der Schalter (21) ein pyrotechnischer Schalter (21) ist.

6. Lenksäule nach einem der vorhergehenden Ansprüche, **dadurch gekennzeichnet, dass** der Koppelabschnitt des Biegedrahts (6, 7) einen hornförmigen Stützabschnitt (20) aufweist, dessen freies Ende (24) an der Seitenwand (13) der Schiene (12) in dem Abstützpunkt (P) abgestützt ist.

7. Lenksäule nach Anspruch 6, **dadurch gekennzeichnet, dass** sich ein erster Vorsprung (34) des Mantelteils (2) axial über einen Teil des ersten Endabschnitts (28) erstreckt, an dem der Vorsprung (34) anliegt, und dass gegenüber dem ersten Vorsprung (34) ein zweiter Vorsprung (35) und ein dritter Vorsprung (36) des Mantelteils (2) angeordnet ist, wobei der zweite Vorsprung (35) und der dritte Vorsprung (36) im axialen Abstand zueinander angeordnet sind.

## Claims

1. A steering column for a motor vehicle, having a steering shaft (1) which is mounted rotatably about its longitudinal axis (25) in a shell part (2), having a guide part (3) by which the shell part (2) is held, having an energy absorption device (5) which is arranged in an operative manner between the guide part (3) and the shell part (2) and which has at least one bending wire (6, 7, 26, 27), which is coupled by means of a first end section (8, 28) to the shell part (2) and by means of a second end section (9, 29) to the guide part (3), wherein a rail (12) is attached by means of at least one side wall (13) to the shell part (2), wherein a pin (17, 18, 31, 32) is coupled to the guide part (3) and the second end section (9, 29) of the bending wire (6, 7, 26, 27) has a coupling section (19, 30) which engages behind the pin (17, 18, 31, 32) and is braced at least at a support point (P) on the side wall (13) at least in the event of a crash, **characterized in that** the support point (P) is arranged on the side of the pin (17, 18, 31, 32) which is gripped by the coupling section (19, 30), and the pin (17, 18, 31, 32) has a first spacing (a) from the side wall (13), while a second spacing (b) between the pin (17, 18, 31, 32) and the support point (P) measuring in the axial direction is at least 1.1 times the first spacing (a) .

2. The steering column as claimed in claim 1, **characterized in that** the pin (17, 18, 31, 32) is connected to a toothed plate (10), while the toothed plate (10) is axially movable with respect to the guide part (3) and can be axially arrested by a locking device (11) with respect to the guide part (3), so that under the action of axial forces arising in the event of a crash an axial displacement of the shell part (2) with respect to the toothed plate (10) arrested on the guide part (3) deforms the bending wire (6, 7, 26, 27) and in this way a portion of the kinetic energy is absorbed by the bending wire (6, 7, 26, 27).

3. The steering column as claimed in claim 2, **characterized in that** the energy absorption device (5) comprises at least two bending wires (6, 7, 26, 27), arranged axially one behind the other, **in that** the toothed plate (10) comprises at least two radially projecting pins (17, 18, 31, 32), a first pin (17, 31) being situated at an axial spacing from a second pin (18, 32), and the second end sections (9, 29) of the at least two bending wires (6, 7, 26, 27), which are respectively broadened at coupling sections (19, 30), engage behind the respective pins (17, 18, 31, 32) and are braced against the side wall (13) of the rail (12) at a respective support point (P), and **in that** at least one bending wire (7, 27) can be deactivated by means of a switch (21).

4. The steering column as claimed in claim 3, **characterized in that** at least one second pin (18, 32) of the toothed plate (10) is configured as a sliding block (18, 47) and is received axially movably in a longitudinal groove (22) of the toothed plate (10), wherein the axial displacement of the sliding block (18, 47) in the longitudinal groove (22) can be blocked by a bolt (23) which is retractable by means of the switch (21).

5. The steering column as claimed in claim 3 or 4, **characterized in that** the switch (21) is a pyrotechnic switch (21).

6. The steering column as claimed in one of the preceding claims, **characterized in that** the coupling section of the bending wire (6, 7) has a horn-shaped supporting section (20), whose free end (24) is braced against the side wall (13) of the rail (12) at the support point (P).

7. The steering column as claimed in claim 6, **characterized in that** a first protrusion (34) of the shell part (2) extends axially across a portion of the first end section (28), against which the protrusion (34) lies, and **in that** a second protrusion (35) and a third protrusion (36) of the shell part (2) are arranged opposite the first protrusion (34), the second protrusion (35) and the third protrusion (36) being arranged at an axial spacing with respect to each other.

## Revendications

1. Colonne de direction destinée à un véhicule automobile et comprenant un arbre de direction (1) qui est monté dans un élément d'enveloppe (2) de manière à pouvoir tourner sur son axe longitudinal (25), un élément de guidage (3) qui maintient l'élément d'enveloppe (2), un dispositif d'absorption d'énergie (5) qui est disposé entre l'élément de guidage (3) et l'élément d'enveloppe (2) et qui comporte au moins un fil flexible (6, 7, 26, 27) qui est accouplé par une première portion d'extrémité (8, 28) à l'élément d'enveloppe (2) et par une deuxième portion d'extrémité (9, 29) à l'élément de guidage (3), un rail (12) pourvu d'au moins une paroi latérale (13) étant fixé à l'élément d'enveloppe (2), une broche (17, 18, 31, 32) étant accouplée à l'élément de guidage (3) et la deuxième portion d'extrémité (9, 29) du fil flexible (6, 7, 26, 27) comportant une portion d'accouplement (19, 30) qui s'engage derrière la broche (17, 18, 31, 32) et qui prend appui en au moins un point d'appui (P) sur la paroi latérale (13) au moins en cas de collision, **caractérisée en ce que** le point d'appui (P) est disposé du côté de la broche (17, 18, 31, 32) qui est enveloppé par la portion d'accouplement (19, 30), la broche (17, 18, 31, 32) étant à une première distance (a) de la paroi latérale (13), une deuxième distance (b) entre la broche (17, 18, 31, 32) et le point d'appui (P), mesurée dans la direction axiale, étant égale à au moins 1,1 fois la première distance (a).

2. Colonne de direction selon la revendication 1, **caractérisée en ce que** la broche (17, 18, 31, 32) est reliée à une plaque dentée (10), la plaque dentée (10) étant déplaçable axialement par rapport à l'élément de guidage (3) et pouvant être bloquée axialement par rapport à l'élément de guidage (3) au moyen d'un dispositif de blocage (11) de sorte que, sous l'action de forces axiales se produisant en cas de collision, le déplacement axial de l'élément d'enveloppe (2) par rapport à la plaque dentée (10) bloquée sur l'élément de guidage (3) déforme le fil flexible (6, 7, 26, 27) et qu'une partie de l'énergie cinétique soit absorbée par le fil flexible (6, 7, 26, 27).

3. Colonne de direction selon la revendication 2, **caractérisée en ce que** le dispositif d'absorption d'énergie (5) comporte au moins deux fils flexible (6, 7, 26, 27) qui sont disposés axialement l'un derrière l'autre, **en ce que** la plaque dentée (10) comporte au moins deux broches (17, 18, 31, 32) radialement saillantes, une première broche (17, 31) étant disposée à une distance axiale d'une deuxième broche (18, 32) et les deuxièmes portions d'extrémité (9, 29) des au moins deux fils flexibles (6, 7, 26, 27), qui sont chacune élargies au niveau de portions d'accouplement (19, 30)), s'engageant derrière les broches respectives (17, 18, 31, 32) et prenant appui sur la paroi latérale (13) du rail (12) en un point d'appui respectif (P), et **en ce qu'**au moins un fil flexible (7, 27) peut être désactivé au moyen d'un commutateur (21).

4. Colonne de direction selon la revendication 3, **caractérisée en ce qu'**au moins une deuxième broche (18, 32) de la plaque dentée (10) est réalisée sous forme de coulisseau (18, 47) et est reçue de manière déplaçable axialement dans une rainure longitudinale (22) de la plaque dentée (10), le déplacement axial du coulisseau (18, 47) dans la rainure longitudinale (22) pouvant être bloqué par un boulon (23) escamotable au moyen du commutateur (21).

5. Colonne de direction selon la revendication 3 ou 4, **caractérisée en ce que** le commutateur (21) est un commutateur pyrotechnique (21).

6. Colonne de direction selon l'une des revendications précédentes, **caractérisée en ce que** la portion d'accouplement du fil flexible (6, 7) comporte une portion d'appui (20) en forme de corne dont l'extrémité libre (24) prend appui sur la paroi latérale (13) du rail (12) au point d'appui (P).

7. Colonne de direction selon la revendication 6, **caractérisée en ce qu'**une première saillie (34) de l'élément d'enveloppe (2) s'étend axialement sur une partie de la première portion d'extrémité (28) sur laquelle la saillie (34) est en appui, et **en ce qu'**une deuxième saillie (35) et une troisième saillie (36) de l'élément d'enveloppe (2) sont disposées en face de la première saillie (34), la deuxième saillie (35) et la troisième saillie (36) étant disposées à une distance axiale l'une de l'autre.
